# EUROPÄISCHE PATENTSCHRIFT

(11) **EP 0 528 064 B1**
(45) Veröffentlichungstag und Bekanntmachung des Hinweises auf die Patenterteilung: **18.01.1995**
(21) Anmeldenummer: 91113775.0
(22) Anmeldetag: 16.08.1991
(51) Int. Cl.: B60R 22/46

(54) **Auslösemechanismus für Gurtstraffer**
Trigger mechanism for a seat belt pretensioner
Mécanisme de déclenchement pour un tendeur de ceinture

(43) Veröffentlichungstag der Anmeldung: 24.02.1993
(73) Patentinhaber: TRW REPA GMBH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- EP-A- 0 305 765
- EP-A- 0 306 299
- DE-A- 3 234 422
- DE-A- 4 027 342

## Beschreibung

Die Erfindung betrifft einen Auslösemechanismus für Gurtstraffer in Sicherheitsgurt-Rückhaltesystemen für Fahrzeuge, mit einer beweglich gelagerten Sensormasse, die in einer Ruhestellung gehalten und fahrzeugsensitiv aus dieser Ruhestellung heraus in wenigstens zwei beiderseits der Ruhestellung gelegene Auslösestellungen verschwenkbar ist, die in einer Ebene liegen und von denen die erste einem Frontalaufprall und die zweite einem Heckaufprall des Fahrzeugs zugeordnet ist.

In der EP-A-0 305 765 ist ein derartiger Auslösemechanismus in Verbindung mit einem mechanischen Federantrieb an einem Gurtstraffer beschrieben.

Ein solcher Auslösemechanismus eignet sich jedoch auch für pyrotechnische Kolben/Zylinder-Antriebe an Gurtstraffern. Üblicherweise ist die Sensormasse von ihrer Ruhestellung ausgehend in eine Auslösestellung bewegbar. Die Bewegung der Sensormasse in die Auslösestellung erfolgt aufgrund ihrer Massenträgheit bei einer Fahrzeugverzögerung von solcher Größe, daß von einem Frontalaufprall des Fahrzeugs ausgegangen werden muß.

Indem der Gurtstraffer auch bei einem Heckaufprall des Fahrzeugs aktiviert wird, wird eine verbesserte Schutzwirkung des Sicherheitsgurtsystem erreicht. Es wurde gefunden, daß ein Auslösemechanismus bei vertretbarem Aufwand dahingehend ausgelegt werden kann, daß eine Auslösung sowohl bei einem Frontalaufprall als auch bei einem Heckaufprall erfolgt.

Durch die Erfindung wird somit ein Auslösemechanismus der eingangs angegebenen Art zur Verfügung gestellt, der sich dadurch auszeichnet,
daß die Sensormasse durch eine bewegliche Baugruppe gebildet ist, die im wesentlichen einen pyrotechnischen Kolben/Zylinder-Antrieb mit einem Schlagzünder und einem Trägerblock umfaßt, der schwenkbar an einem mit dem Gehäuse eines Gurtaufrollers fest verbundenen Sockel gelagert ist, daß an dem Sockel ein Schlaghebel schwenkbar gelagert ist, dessen Amboß durch Federspannung gegen den Schlagzünder vorbelastet ist, und daß der Schlaghebel einen Stützarm aufweist, dessen freies Ende in der Ruhestellung auf einer Haltefläche am Trägerblock abgestützt ist, während es beiderseits der Stelle, an der es sich in der Ruhestellung abstutzt, freigegeben wird.

Diese und weitere vorteilhafte Ausführungsformen der Erfindung sind in den Unteransprüchen angegeben.

Weitere Merkmale und Vorteile der Erfindung ergeben sich aus der folgenden Beschreibung einer Ausführungsform und aus der Zeichnung, auf die Bezug genommen wird. In der Zeichnung zeigen:
- Fig. 1: eine Perspektivansicht eines Gurtaufrollers mit angebautem Gurtstraffer, der über einen pyrotechnischen Kolben/Zylinder-Antrieb verfügt;
- Fig. 2: eine Explosionsansicht der in Fig. 1 gezeigten Baugruppe;
- Fig. 3: einen Teilschnitt der in den Fig. 1 und 2 gezeigten Baugruppe;
- Fig. 4, 5 und 6: den Auslösemechanismus der in den Fig. 1 bis 3 gezeigten Baugruppe in verschiedenen Funktionszuständen.

Die beschriebene Ausführungsform des Auslösemechanismus gewährleistet eine Auslösung eines Gurtstraffers sowohl bei einem Frontalaufprall als auch bei einem Heckaufprall.

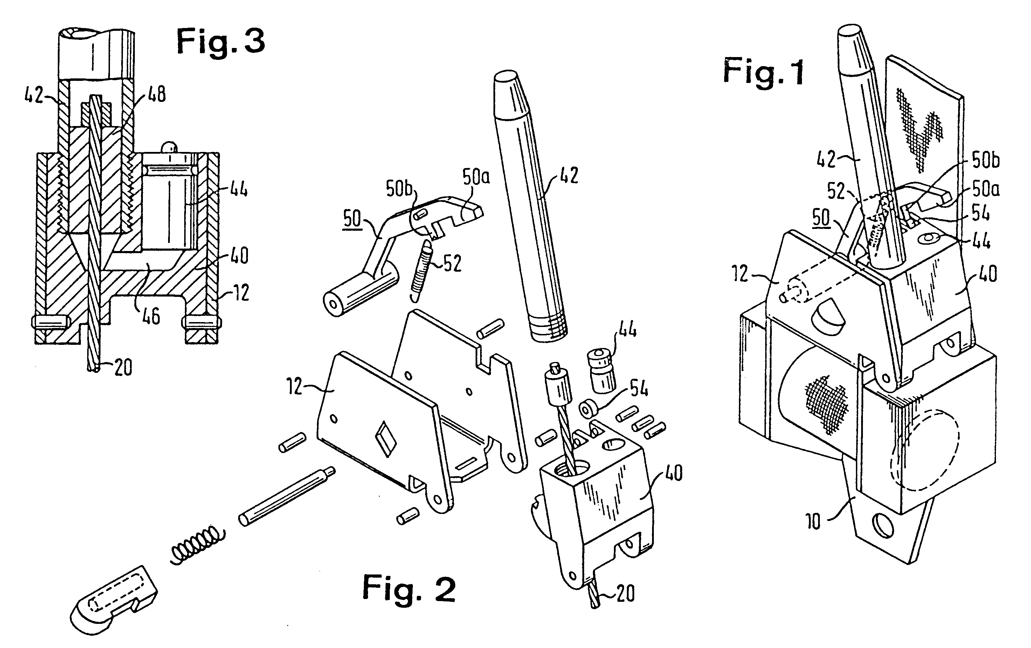

Bei der in den Fig. 1 bis 6 gezeigten Ausführungsform ist ein Gurtstraffer mit einem Gurtaufroller 10 zu einer Baugruppe vereinigt. Der Gurtstraffer verfügt über einen pyrotechnischen Kolben/Zylinder-Antrieb.

Zwischen den beiden parallelen Schenkeln eines am Gehäuse des Gurtaufrollers 10 befestigten Sockels 12 ist ein Trägerblock 40 schwenkbar gelagert. In eine Bohrung des Trägerblocks 40 ist das mit Gewinde versehene Ende eines Führungszylinders 42 eingeschraubt. In eine weitere Bohrung des Trägerblocks 40 ist eine Gasgeneratorpatrone 44 mit Schlagzünder eingesetzt. Wie in Fig. 3 gezeigt, stehen diese beiden Bohrungen über einen Kanal 46 miteinander in Verbindung. Im Inneren des Führungszylinders 42 ist ein Kolben 48 aufgenommen, der durch die über den Kanal 46 eingeleiteten, von der Gasgeneratorpatrone 44 erzeugten Gase beaufschlagbar ist und an einem Zugseil 20 angreift. Zwischen den beiden Schenkeln des Sockels 12 ist ferner ein Schlaghebel 50 an seinem einen Ende schwenkbar gelagert. An seinem anderen Ende trägt dieser Schlaghebel 50 einen Amboß 50a. Durch eine zwischen dem Sockel 12 und einem in den Schlaghebel 50 eingesetzten Stift eingehängte Zugfeder 52 wird dieser Schlaghebel 50 unter Vorspannung gesetzt, so daß er bestrebt ist, im Uhrzeigersinn verschwenkt zu werden. Er stützt sich jedoch mit einem Stützarm 50b, der in der Nähe des Amboßes 50a annähernd senkrecht absteht, auf einer Halterolle 54 ab, die am Trägerblock 40 leichtgängig drehbar gelagert ist. Durch diese Abstützung des Schlaghebels 50 wird der Amboß 50a im Abstand über dem Schlagzünder der Gasgeneratorpatrone 44 gehalten, solange die Anordnung in ihrem Ruhezustand ist. Wie aus den Fig. 1 bis 6 ersichtlich ist, besitzt der Stützarm 50b eine an die Oberfläche der Halterolle 54 angepaßte konkave Auflagefläche an seinem freien Ende. Diese Auflagefläche kann gekrümmt oder kerbenförmig sein; über den Winkel der Kerbe kann die Ansprechschwelle des Auslösemechanismus beeinflußt werden. Ferner ist der Stützarm 50b schwach gekrümmt, mit einem Krümmungsradius, der etwa dem Abstand zwischen dem Schwenklager des Schlaghebels 50 und der Halterolle 54 entspricht.

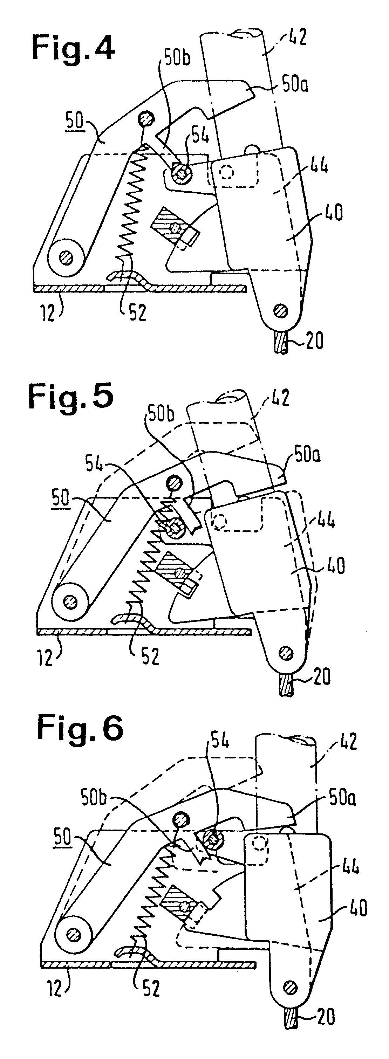

Fig. 4 zeigt den Auslösemechanismus in seinem Ruhezustand. Der Trägerblock 40 mit Führungsrohr 42 und Kolben 48 und allen am Trägerblock 40 befestigten Teilen bildet die Sensormasse des Auslösemechanismus. Durch die Zugfeder 52 wird diese Sensormasse in ihrer in Fig. 4 gezeigten Ruhestellung gehalten. Bei einer ein bestimmtes Maß überschreitenden Verzögerung oder Beschleunigung wird jedoch die Sensormasse in der einen oder anderen Richtung verschwenkt. Bei einer Verschwenkung entgegen dem Uhrzeigersinn, wie in Fig. 5 gezeigt, läuft zunächst der Stützarm 50b auf der Halterolle 54 hoch und kehrt anschließend wieder in seine Ruhelage zurück, wenn die Trägheitskräfte nicht weiter zunehmen. Bei weiter ansteigenden Trägheitskräften bewegt sich jedoch das konkave Ende des Stützarmes 50b über die Oberfläche der Halterolle 54 bis zu einer Stelle, an welcher diese den Stützarm nicht mehr halten kann und dieser auf der Rolle abgleitet und sie schließlich hintergreift. Die Zugfeder 52 beschleunigt nun den Schlaghebel 50, bis der Amboß 50a auf dem Schlagzünder der Gasgeneratorpatrone 44 aufschlägt. Die nun freigesetzten Gase treiben den Kolben 48 im Führungszylinder 42 hoch und nehmen das Zugseil 20 mit, wodurch die Rückstraffung bewirkt wird, indem über das Zugseil 20 eine in Fig. 2 gestrichelt dargestellte Seilscheibe in Drehung versetzt wird, mit der über eine Kupplung die Gurtspule mitgenommen wird.

Fig. 6 zeigt den analogen Auslösevorgang bei einer Verschwenkung der Sensormasse in entgegengesetzter Richtung. Da die Halterolle 54 im Abstand von dem Trägerblock 40 gehalten ist, kann der Stützarm 50b sowohl vor dieser Halterolle als auch hinter dieser abwärts gleiten. Durch die Bogenform des Stützarms 50b wird erreicht, daß der Schlaghebel 50 in seiner Schwenkbewegung durch die Halterolle 54 nicht behindert wird, so daß er problemlos durch die Zugfeder 52 beschleunigt werden kann, um den zur Auslösung des Schlagzünders erforderlichen Impuls zu erlangen.

## Patentansprüche

1. Auslösemechanismus für Gurtstraffer in Sicherheitsgurt-Rückhaltesystemen für Fahrzeuge, mit einer beweglich gelagerten Sensormasse (40, 42, 48), die in einer Ruhestellung gehalten und fahrzeugsensitiv aus dieser Ruhestellung heraus in wenigstens zwei beiderseits der Ruhestellung gelegene Auslösestellungen verschwenkbar ist, die in einer Ebene liegen und von denen die erste einem Frontalaufprall und die zweite einem Heckaufprall des Fahrzeugs zugeordnet ist, dadurch gekennzeichnet, daß die Sensormasse durch eine bewegliche Baugruppe gebildet ist, die im wesentlichen einen pyrotechnischen Kolben/Zylinder-Antrieb (42, 48) mit einem Schlagzünder und einem Trägerblock (40) umfaßt, der schwenkbar an einem mit dem Gehäuse eines Gurtaufrollers (10) fest verbundenen Sockel (12) gelagert ist, daß an dem Sockel (12) ein Schlaghebel (50) schwenkbar gelagert ist, dessen Amboß (50a) durch Federspannung (52) gegen den Schlagzünder (44) vorbelastet ist, und daß der Schlaghebel (50) einen Stützarm (50b) aufweist, dessen freies Ende in der Ruhestellung auf einer Haltefläche (54) am Trägerblock (40) abgestützt ist, während es beiderseits der Stelle, an der es sich in der Ruhestellung abstützt, freigegeben wird.

2. Auslösemechanismus nach Anspruch 1, dadurch gekennzeichnet, daß der Stützarm (50b) bogenförmig mit einem Radius, der gleich dem seiner Bewegungsbahn bei einer Verschwenkung des Schlaghebels (50) ist, gekrümmt ist.

3. Auslösemechanismus nach Anspruch 1 oder 2, dadurch gekennzeichnet, daß die Haltefläche am Trägerblock (40) durch eine drehbar gelagerte Rolle (54) gebildet ist und daß die Aufstützfläche am freien Ende des Stützarmes (50b) konkav ausgebildet ist.

## Claims

1. Trigger mechanism for belt tighteners in safety belt restraining systems for vehicles, comprising a movably mounted sensor mass (40, 42, 48) which is held in a rest position and is movable out of said rest position in vehicle-sensitive manner into at least two trigger positions which are situated on either side of the rest position in one plane and the first of which is associated with a head-on collision and the second with a collision in which the vehicle is rammed from behind, characterized in that the sensor mass is formed by a movable assembly which includes essentially a pyrotechnical piston/cylinder drive (42, 48) with an impact igniter and a carrier block (40) which is mounted pivotally on a base (12) fixedly connected to the housing of a belt retractor (10), that on the base (12) a striker lever (50) is pivotally mounted, the anvil (50a) of which is biased by spring loading (52) against the impact igniter (44), and that the striker lever (50) comprises a support arm (50b), the free end of which bears in the rest position on a holding surface (54) on the carrier block (40), said end being released on either side of the point on which it bears in the rest position.

2. Trigger mechanism according to claim 1, characterized in that the support arm (50b) is arcuately curved with a radius which is equal to that of its movement path on pivoting of the striker lever (50).

3. Trigger mechanism according to claim 1 or 2, characterized in that the holding surface on the carrier block (40) is formed by a rotatably mounted roller (54) and that the support surface at the free end of the support arm (50b) is made concave.

## Revendications

1. Mécanisme de déclenchement pour tendeur de ceinture dans des systèmes de retenue de ceinture de sécurité pour véhicules, comprenant une masse de captage (40, 42, 48) qui est montée mobile, qui est maintenue dans une position de repos et qui peut quitter cette position de repos par pivotement, en réponse au comportement du véhicule, pour adopter au moins deux positions de déclenchement qui sont situées de part et d'autre de la position de repos, qui sont dans un plan et dont la première correspond à un choc frontal et dont la seconde correspond à un choc à l'arrière du véhicule, caractérisé en ce que la masse de captage est formée par un ensemble mobile qui comprend pour l'essentiel un mécanisme d'entraînement pyrotechnique piston et cylindre (42, 48) qui est muni d'une amorce à percussion et d'un bloc de support (40) et est monté pivotant sur un socle (12) solidaire du boîtier d'un enrouleur de ceinture (10), en ce que, sur le socle (12), est monté pivotant un levier de percussion (50) dont l'enclume (50a) est précontrainte par la tension d'un ressort (52) contre l'amorce à percussion (44), et en ce que le levier de percussion (50) comporte un bras d'appui (50b) dont l'extrémité libre prend appui, en position de repos, sur une surface de retenue (54) du bloc de support (40), mais est libre de tout contact de part et d'autre de l'endroit où elle prend appui en position de repos.

2. Mécanisme de déclenchement selon la revendication 1, caractérisé en ce que le bras d'appui (50b) est incurvé en forme d'arc dont le rayon est égal à celui de sa trajectoire en cas de pivotement du levier de percussion (50).

3. Mécanisme de déclenchement selon la revendication 1 ou 2, caractérisé en ce que la surface de retenue du bloc de support (40) est formée par un galet (54) monté tournant, et en ce que la surface d'appui située à l'extrémité libre du bras d'appui (50b) est concave.
